# EUROPEAN PATENT SPECIFICATION

(11) **EP 2 213 927 B1**
(45) Date of publication and mention of the grant of the patent: **21.08.2013**
(21) Application number: 09151675.7
(22) Date of filing: 29.01.2009
(51) Int. Cl.: F16L 33/207

(54) **Hose fitting and method for fastening the hose fitting to a hose**
Schlauchfassung und Verfahren zum Befestigen für die Schlauchfassung an einem Schlauch
Raccord de tuyau et procédé de fixation du raccord de tuyau sur un tuyau

(43) Date of publication of application: 04.08.2010
(73) Proprietor: Eaton Industrial IP GmbH & Co. KG, 12529 Schönefeld (DE)
(72) Inventor: Theberath, Bjoern, 76456 Kuppenheim (DE); Schmidt, Jürgen, 76437 Rastatt (DE); Scherer, Eric, 76470 Oetigheim (DE)
(74) Representative: Tabeling, Marcella M.J.

(56) References cited:
- GB-A- 1 294 132
- GB-A- 2 022 744
- GB-A- 2 046 388
- US-A- 4 366 841
- US-B1- 6 434 990

## Description

The present invention refers to a hose fitting in combination with a hose end section, in particular for flexible wire reinforced hoses. Such hose fittings shall provide a sealing connection between the hose fitting and the respective end section of a hose, even if the hose is under high fluid pressure. For high pressure applications wire reinforced hoses are often used which have an outer sheathing, an inner sheathing and a reinforcement layer, particularly containing metal wires, between the two sheathings. The hose fittings are required to be cheap, easy to produce and easy to mount on the end section of a hose.

Several different hose fittings are already known. GB 2 000 840 A discloses a hose fitting in form of a hose-end connector for a thermoplastics material hose having no metal reinforcement. The hose fitting contains a stem portion and ferrule which is swaged to the stem portion in two assembly stages. During the first stage a flange portion of the ferrule is swaged into locking engagement with an annular groove in the stem portion. Afterwards in a second assembly stage a main body portion of the ferrule swaged onto a hose located in an annulus between the stem portion and ferrule. In this second assembly stage, the swaging force compresses the hose wall. As all of the stem and ferrule zones which contact the inner and outer walls of the hose are rounded, there is no tendency for the hose material to be severed and the compression force causes the material of the hose wall to flow. In the fastened state where the hose fitting is fastened to the end section of the hose, the annulus between the ferrule and the stem is completely filled with the hose material.

Another hose fitting is known from US 2006/0131878 A1 comprising a coupling element, a press fit holder and an insert. Before the hose fitting can be assembled to the hose end section, the latter is peeled. An external pressure acting on the press fit holder results in a compression of the press fit holder and the insert surrounded by the press fit holder. Hose gripping means at the inside of the insert are thereby pressed into the wire mesh of the hose end section. The external pressure causes also fixing means of the press fit holder to come into engagement with counter fixing means of the coupling element.

FR 1 227 889 B discloses a hose fitting with a holding sleeve consisting of several sections. These section hav a grooved axial end which is link like inserted between the connecting element and an additional fixing ring. Flanges with screwing holes are provided at the outer plane of each section which serve to detachably connect the sections. After all section are inserted between the fixing ring and the connecting element the sections can be screwed together.

US 4 366 841 shows a hose fitting for flexible hoses with a connecting element and a holding sleeve for fastening the hose fitting to a hose end section. The connecting element has an insert section, which is introduced into the hose end section. The holding sleeve contains a deformable fixing section having a fixing part to engage a fixing counter part at the connecting element, so that connecting element and holding sleeve can be connected to each other. The holding sleeve also contains a holding section with radially inward projecting holding projections each having at least one cutting edge for cutting into the outer sheathing of the hose end section. Between the deformable fixing section and the holding section an intermediate section is provided at the holding sleeve. Directly adjacent to the counter fixing part the connecting element contains a stop with an abutment surface for abutment of the hose end. Stop is engaged by the fixing part of the holding sleeve when the fitting is fastened to the hose end section. Such a hose fitting is also disclosed in GB 2 022 744 A and GB 2 046 388 A.

GB 1294132 discloses a particularly relevant hose fitting. It is one object of the present invention to provide a hose fitting, particularly for high pressure applications, which can be easily mounted on the hose end section, which can be pre-assembled and easily mounted on a hose end section without the need to peel the latter.

This problem is solved by a hose fitting in combination with a hose end section according to claim 1.

The hose fitting according to the invention contains a connecting element and a holding sleeve. The holding sleeve has a deformable fixing section at its one end with a fixing part provided to engage a fixing counter part of the connecting element. By applying a crimp force onto the fixing section of the holding sleeve, the fixing part and a counter fixing part can be brought into engagement in order to pre-assemble the holding sleeve with the connecting element. No additional fixing means are necessary to fix the holding sleeve to the connecting element. Thus it is possible that the hose fitting consists of only two parts: the holding sleeve and the connecting element. Each of said parts can be made of one single piece. The holding sleeve is jointless in its circumferential direction. The holding sleeve has a ring shaped cross section at every point along its axial direction. The outer plane of the holding sleeve is flange- or projectionless formed.

To fasten the hose fitting to the hose end section of a respective hose an insert section of the connecting element is inserted into the opening of the hose end section until the hose end reaches a stop projection on the outside face of the connecting element. The hose end section is unpeeled so that an outer sheathing, particularly made of plastic or elastomer, provides material as counter part for a holding section of the holding sleeve comprising radially inward projecting holding projections, each holding projection having at least one cutting edge. If a crimp force is now applied to the deformable holding section of the holding sleeve, the cutting edges of the holding projections cut into the outer surface of the hose end section and intrude into the outer sheathing of the hose end section. Thus, the hose end section is fixed by the holding projections. In the fastened state of the hose fitting an axially clearance between the hose end and the fixing part of the holding sleeve is created. This clearance is bridged by providing an intermediate section between the fixing section and the holding section of the holding sleeve.

The hose fitting is easy to produce and can be pre-assembled without the danger to crimp the holding section, when the fixing section of the holding sleeve is fixed to the connecting element. The intermediate section between the fixing section and the holding section provides enough distance between the fixing part and the holding projections, that during crimping or swaging the fixing part into engagement with the counter fixing part, the holding section and its holding projections remain in their unchanged original position. This is important in order to be able to insert the hose end section between the insert section of the connecting element and the deformable holding section of the holding sleeve in the next mounting step. Further the hose end section can remain unpeeled, which makes it very easy to bring the hose fitting in a fastened state, where it is fastened to the hose end section. Because the holding projections cut and insert into the outer sheathing of the hose end section, a very strong connection between the hose fitting and the hose can be achieved, which is also suitable for high pressure applications.

According to a preferred embodiment, the axial length of the clearance is greater than the axial distance between two adjacent arranged holding projections. The axial length of the clearance can be for example between 1.5 and 2 times longer than the distance between adjacent holding projections. In the fastened state of the hose fitting, the axial length of the clearance can preferably be between 1 or 3 cm, particularly 2 cm. The axial length of the intermediate section of the holding sleeve is chosen respectively. This provides a good decoupling of the fixing section and the holding section.

In a further preferred embodiment the intermediate section is at least partly conically shaped, particularly if the hose fitting is in its fastened state. Advantageously the outside diameter of the holding section is greater than the outside diameter of the fixing section. The greater diameter of the holding section makes it possible to insert the hose end section between the insert section of the connecting element and the holding section of the holding sleeve without the need to peel the hose end section. An easy connection between the fixing section and the holding section of the holding sleeve can be made by means of an intermediate section which is at least partly conically shaped.

Favourably the wall of the intermediate section of the holding sleeve has an essentially constant thickness. In other words, there are no projections or openings provided in the wall of the intermediate section of the holding sleeve, so that a simple form of the holding sleeve can be achieved.

In the fasten state of the hose fitting, an annular gap around the connecting element is created because of the clearance between the hose end and the fixing part and the radially distance between the intermediate section of the holding sleeve and the connecting element.

It is preferred to use the hose fitting in high pressure applications with a reinforced hose having a reinforcement layer in between an outer sheathing and an inner sheathing. The reinforcement layer particularly contains metal wires. According to the invention the holding projections intrude into the outer sheathing of the hose end section until the radially inner ends of the holding projections reach the reinforcement layer. This provides a further improved connection between the hose fitting and the hose.

It is also possible, that the holding sleeve provides a clamping projection, which is projecting radially inward from the holding section and which is axially arranged between the holding projections and the free end of the holding sleeve opposed to the fixing section. Such a clamping projection can create an additional sealing effect between the holding sleeve and the outer sheathing of the hose end section.

In order to realize a simple possibility to define the position of the hose end fastened to the hose fitting - in its fastened state - a stop projection is provided at the connecting element adjacent to the insert section, which projects radially outward and limits the axial length of the insert section.

It is further possible, that the distance between two adjacent holding projections in the axial direction corresponds essentially to the thickness of the hose wall. In that way a strong connection between the hose fitting and the hose end section can be attained. It is further advantageous, when the insert section of the connecting element has at least partly a ribbed outer surface for providing a good sealing contact with the inner sheathing of the hose end section in the fastened state of the hose fitting.

The insertion of the insert section of the connecting element into the opening of the hose end section can be simplified by reducing the outer diameter of the insert section along its end section. The outside diameter of said end section can be reduced conically towards the free end of the insert section.

Preferred embodiments of the present invention are explained below with reference to the accompanying drawing, wherein:
- Fig. 1: shows a first embodiment of the hose fitting in its original non-fastened state and
- Fig. 2: shows a second embodiment of the hose fitting ac- cording to the present invention in fastened state.

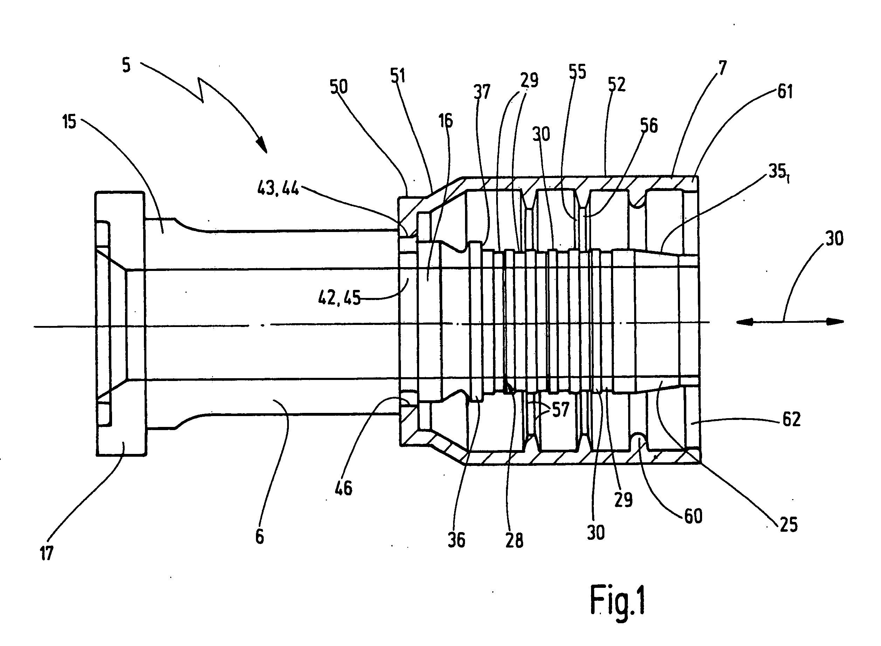

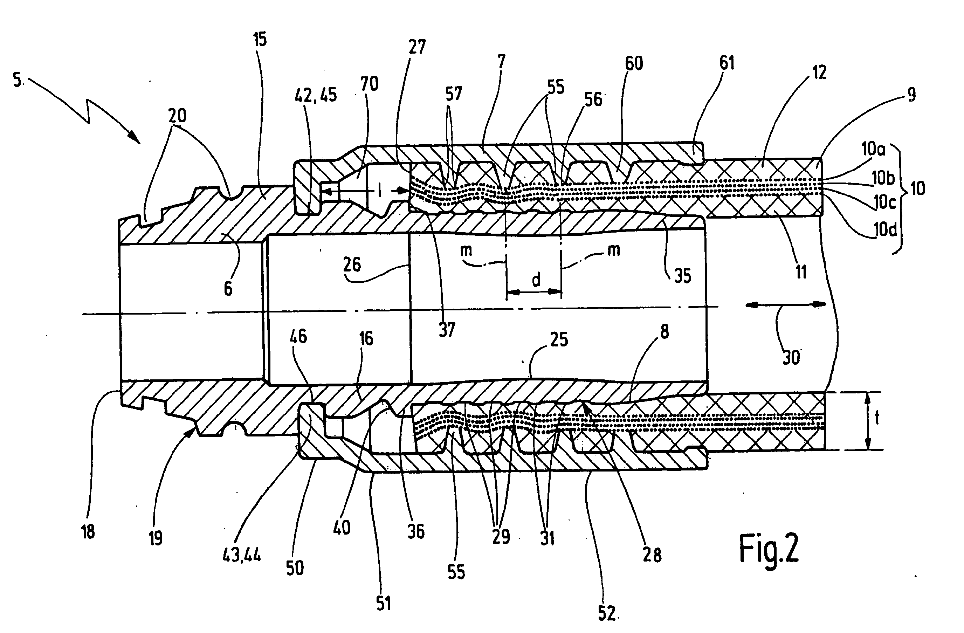

Figures 1 and 2 show a hose fitting 5 having a connecting element 6 and a holding sleeve 7, which work together to fasten the hose fitting 5 to a hose end section 8 of a hose 9, which can be seen in Figure 2. According to the shown embodiment the hose fitting 5 consists of only two parts: the connecting element 6 and the holding sleeve 7. The connecting element 6 as well as the holding sleeve 7 can each be made of one single piece. No additional fixing means are provided in order to connect the holding sleeve 7 with the connecting element 6. The hose fitting 5 could thus be named as two piece fitting.

The hose fitting 5 according to the present invention is preferably used for high pressure applications, where the fluid pressure is particularly at least 400 bar. The hose 9 in such high pressure applications contains a reinforcement layer 10 arranged between an inner sheathing 11 and an outer sheathing 12. The reinforcement layer can for example be made of flexible metal wires and may consist of multiple tiers and contains four wire tiers 10a, 10b, 10c, 10d in the shown preferred embodiment. Each winding of one of the wire tiers 10a, 10b, 10c, 10d is placed to the adjacent winding of the same tier 10a, 10b, 10c, 10d without or only with a small axial distance. The helix angle of the wire of each tier is preferably smaller than 45°, more advantageously smaller than 30° and in the preferred embodiment smaller than about 10°, for example between 1 and 5°. Each wire tier 10a, 10b, 10c, 10d may have a different helix angle, but preferably the value of the helix angle of all wire tiers is essentially the same. The algebraic sign of the helix angle of the tiers may change - and thus the direction of the winding - with reference to a radial plane of the hose 9, in order that the wire tiers 10a, 10b, 10c, 10d form a netting. As shown in figure 2, the axial distance between two adjacent windings of one of the tiers 10a, 10b, 10c, 10d is essentially not greater than the thickness of the used wire.

The inner or outer sheathing 11, 12 consists of elastomer or rubber material. Other hose constructions are also suitable for the hose fitting 5 according to the present invention.

The connecting element 6 is of a tubular shape and has a first end portion 15 and a second end portion 16. The first end portion 15 is provided to be connected to counter fitting means, which are not shown in the drawing. According to the first embodiment of the connecting element 6, shown in figure 1, a nut 17 is arranged at the first end portion for connecting the connecting element 6 to the counter fitting means. The first end portion 15 according to the embodiment shown in figure 2 is of different shape whereby the outer diameter of the first end portion 15 is reduced to the free end 18 of the first portion 15. On the outside face 19 of the first portion 15 of the second embodiment of the connecting element 6 shown in figure 2, one or more annular grooves 20 are provided. The shape of the grooves 20 seen in the cross-section can be rectangular or semicircular, or any other suitable shape. Such grooves are used for sealing rings, snap-rings or other means used to connect the connecting element 6 sealingly to not shown counter fitting means.

The second end portion 16 of the connecting element 6 contains an insert section 25 which is provided to insert the connecting element 6 into the essentially circular opening 26 of the hose and 27. The outer diameter of the insert section 25 is adapted to the diameter of the opening 26 of the hose end section 8 in order to create a press fit. In order to attain a good sealing contact between the outer face 28 of the insert section 25 and the inner sheathing 11 of the hose end section 8, the outer face 28 is ribbed and thus provides a plurality of annular openings 29, which are spaced from each other in an axial direction 30 of the hose fitting 5. Between these annular openings 29 sealing ribs 31 are created, which have an essentially rectangular cross-section according to the preferred embodiment. If the hose fitting is in its fastening state, the material of the inner sheathing 11 of the hose end section 8 flows into the annular openings 29 of the insert section 25 and guarantees a good sealing contact.

In order to simplify the insertion of the connecting element 6 into the hose end section 8, the insert section 25 has an end part 35 with a reduced outer diameter. According to the present embodiment, the end part 35 can for example be at least partly conically shaped. Other shapes in order to reduce the outer diameter are also possible.

Opposed to the end part 35, the insert section is limited in the axial direction 30 by means of a radially outward projecting stop 36, which can have a trapezoidal cross-section as shown in figure 2 of one preferred embodiment. Other cross-sections are also suitable. The outer diameter of the stop 36 is greater than the outer diameter of the sealing ribs 31 of the insert section. An annular plane of the stop 36, arranged adjacent to the outer face 28 of the insert section 25 facing in the direction of the insert section 25 defines the abutment plane 37 for the hose end 27. The abutment plane 37 and the outer face 28 of the insert section 25 include an angle of about 90° in the shown preferred embodiment. In the fastened state of the hose fitting 5 the hose end 27 is into contact with the abutment plane 37 of the stop 36. Apart from the described preferred embodiment, the stop 36 may have any other cross-section, for example a rectangular cross-section.

The connecting element 6 has a fluid bore 39 which extends over the entire axial length of the connecting element 6. In ther fastened state of the hose fitting 5, fluid can flow from the hose through the fluid bore 39 of the connecting element 6 to the not shown counter fitting means of the hose fitting 5 and vice versa.

Adjacent to the stop 36 an annular groove-like cavity 40 is provided in the outside face of the connecting element 6. This cavity 40 can be part of a so called "wire trap" together with a corresponding tooth of a holding sleeve 7. Such a wire trap requires a peeled hose end section 8, so that the tooth of the holding sleeve can force the wire reinforcement layer of the hose 9 into the cavity 40 in order to generate a high holding force. A holding sleeve 7 having such a wire trap tooth is not shown in the drawing and does not form part of this invention. An advantage of the present inventive hose fitting 5 is that connecting elements 6 having a cavity 40 as part of a wire trap can be used without the need to design and produce a connecting element 6 without such cavity 40, even though the cavity 40 is not necessary for the inventive hose fitting 5.

At the intersection between the first end portion 15 and the second end portion 16 of the connecting element a fixing counter part 42 is provided which is designed to cooperate with a deformable fixing part 43 of the holding sleeve 7 in order to undetachably fix the holding sleeve 7 to the connecting element 6. More specifically, according to the preferred embodiment, the fixing part of the holding sleeve 7 is formed by a radially inward projecting collar 44 of essentially rectangular cross-section. Accordingly the fixing counter part 42 is formed by an annular groove 45, whereby the cross-section of the annular groove 45 is adapted to the cross-section of the collar 44. Any other than a rectangular cross-section of the collar 44 and the groove 45 is also suitable for the hose fitting 5.

The holding sleeve 7 has essentially the form of a hollow cylinder or bushing, whereby the inner and outer diameter can change over the axial extend of the holding sleeve 7. The holding sleeve 7 is jointless formed in its circumferential direction and according to the present embodiment made of one single piece. The inner diameter of the collar 44 is the smallest area of the holding sleeve 7. The inner diameter of collar 44 is greater than the outside diameter of any part of the second end portion 16 of the connecting element in order to be able to insert the connecting element 6 into a collar bore 46 defined by the annular collar 44. This state is shown in figure 1, whereby the holding sleeve 7 and the connecting element 6 are not fixed with each other yet. Only the second end portion 16 was inserted through the collar bore 46 of the holding sleeve 7.

The fixing part 43, formed by the collar 44 is arranged at one axial and of the holding sleeve 7. This end with the fixing part 43 forms an axial fixing section 50 of the holding sleeve 7.

Following to the fixing section 50, the holding sleeve 7 has an intermediate section 51 and a deformable holding section 52. The holding section of the holding sleeve 7 is responsible for exerting a holding force on the hose end section 8, if the hose fitting 5 is in its fastened state. Therefore the holding section 52 provides a plurality of radially inward projecting holding projections 55, which are spaced from each other in axial direction 30. According to the preferred embodiments shown in the drawing, preferably two or three holding projections 55 are arranged at the holding sleeve 7.

As shown in figures 1 and 2, the holding projections 55 have a trapezoidal cross-section, so that at its radially inner ends 56 two cutting edges 57 are formed. Apart from the shown preferred embodiments, a cross-section of the holding projections may have any other suitable shape, whereby at least one cutting edge at the inner end 56 of a holding projection 55 shall be provided.

The axial distance d between the middle axes of two adjacent holding projections 55 corresponds preferably essentially to the thickness t of the hose wall in order to provide a good holding force between the hose fitting 5 and the hose end section 8 in the fastened state as shown in figure 2. In the preferred embodiments according to the drawing, the holding projections are continuously annular shaped. Apart from that, it is also possible, that each holding projection 55 contains a plurality of holding teeth which are arranged over the periphery of the holding projection 55 and preferably evenly distributed over the periphery.

In addition to the holding projections 55, a radially inward projecting clamping projection 60 can be provided at the holding section 52. The clamping projection 60 has a rounded outline without sharp edges. The height of the clamping projection 60 in radial direction is essentially the same as the height of the holding projections 55, but can also be slightly smaller.

The clamping projection 60 is arranged at the holding section 52 of the holding sleeve 7 between a free end 61 of the holding sleeve 7, which is opposed to the other end of the holding sleeve 7 containing the fixing section 50. The free end 61 of the holding sleeve 7 can have a bulge-like finish, so that a slight bulge 62 projecting radially inward is formed. The bulge 62 can provide an additional clamping effect between the holding sleeve 7 and the outer sheathing 12 of the hose end section 8 in the fasten state of the hose fitting 5.

The intermediate section 51 of the holding sleeve 7, arranged between the fixing section 50 and the holding section 52 contains a conically shaped area so that the holding sleeve 7 is expanded from a smaller diameter of the fixing section 50 to a greater diameter of a holding section 52. The thickness of the wall of the holding sleeve 7 along the intermediate section 51 is essentially constant, so that both the inner diameter and the outer diameter are transferred from a small value of the fixing section 50 to a greater value of the holding section 52. This conically shaped part of the intermediate section 51 exists according to the preferred embodiment in the non-mounted date, where the holding sleeve 7 is not connected to the connecting element 6, as well as in the mounted state, where the holding sleeve 7 is undetachably fixed to the connecting element 6. In a modified, not shown embodiment, it would be also possible, that the conically shaped part of the holding sleeve 7 is generated during fixing the holding sleeve 7 to the connecting element 6.

To transfer the hose fitting 5, into the fastened state, where it is fastened to the hose end section 8, three fastening steps are executed sequentially:

The originally non-mounted state is shown in figure 1. In a first fastening step, the second end portion 16 is inserted into the bore 46 of the holding sleeve 7 in order that the holding sleeve 7 is arranged coaxial to the second end portion 16 of the connecting element 6. The groove 45 of the connecting element 6 and collar 44 of the holding sleeve are aligned in the same axial position. By exerting a crimp force to the periphery of the fixing section 50, the collar 44 is engaging the groove 45 until the diameter of the bore 46 is reduced to the diameter of the ground of the groove 45. Thereby the holding sleeve 7 is deformed plastically. In this state, the holding sleeve 7 and the connecting element 6 are fixed with each other. This state could be named as pre-assembled state of the hose fitting 5.

During the fixing of the holding sleeve 7 to the connecting element 6, the holding section 52 is left undeformed. The intermediate section 51 separates the fixing section 50 from the holding section 52, so that the plastic deformation of the fixing section 50 does have no deformation effect on the holding section 52.

In the next fastening step the hose end section 8 of the hose 9 is pushed into the annular free space between the insert section 25 of the connecting element 6 and the holding section 52 of the holding sleeve 7 until the hose end 27 comes into contact with the abutment plane 37 of the stop 36. In this inserted position the insert section 25 of the connecting element 6 is completely inserted into the hose end section 8. The hose end section 8 is left unpeeled, so that the complete thickness of the wall of the hose end section is available to create the holding force between the hose fitting 5 and the hose end section 8 in the next fastening step. According to the preferred embodiment as shown in figure 2, all three layers 10, 11, 12 in their entire thickness are arranged between the holding section 52 of the holding sleeve 7 and the insert section 25 of the connecting element 6.

In the last fastening step a crimping force to the periphery of the holding section 52 of the holding sleeve 7 is exerted which deforms the holding section 52 plastically. Due to this, the holding projection 55 are moved radially inward and cut into the outer sheathing 9 of the hose end section. The holding projections intrude into the outer sheathing 12 of the hose end section, preferably until the inner ends 56 of the holding projections 55 reach the reinforcement layer 10 of the hose end section. With the holding projections 55 intruded into the outer sheathing 12 of the hose end section 8 a good holding force is created between the hose fitting 5 and a hose end section 8. The hose fitting 5 is in its fastened state.

In this fastened state of the hose fitting 5 an axial clearance 70 exists between the hose end 27 and the fixing part 43 formed by the collar 44. The axial length l of the clearance 70 according to the shown preferred embodiment, is greater than the axial distance d between the radially extending midplanes m of two adjacent arranged holding projections 55. The axial length l can for example have values between 1 and 3 cm, particularly about 2 cm.

Because of the clearance 70 an annular gap is created around the connecting element 6 which is covered or bridged radially outward by the intermediate section 51 of the holding sleeve 7. No material of the hose end section 8 is located in the annular gap created by the clearance 70 in the fastened state of the hose fitting.

## Claims

1. A hose fitting (5) in combination W/a hose end section (8)
the fitting having a connecting element (6) and a holding sleeve (7) fastening the hose fitting (5) to said hose end section (8),
the connecting element (6) having an insert section (25) inserted into the opening (26) of the hose end section (8),
the connecting element (6) having a radially outward projecting stop (36) opposed to an end part (35) of the insert section (25) and limiting the insert section (25) in an axial direction (30), the radially outward projecting stop (36) having an annular abutment plane (37) abutting the hose end (27) arranged adjacent to the outer face (28) of the insert section (25) facing in the axial direction (30),
the connecting element (6) having an annular groove-like cavity (40) in its outside face adjacent to the stop (36),
the holding sleeve (7) having a deformable fixing section (50) at its one end with a fixing part (43) engaging a fixing counter part (42) of the connecting element (6) in order to fix the holding sleeve (7) to the connecting element (6) after deformation of the fixing section,
the fixing part (43) of the holding sleeve (7) being formed by a radially inward projecting collar (44) and the fixing counter part (42) being formed by an annular groove (45), whereby the cross-section of the annular groove (45) is adapted to the cross-section of the collar (44),
the holding sleeve (7) having a holding section (52) with radially inward projecting holding projections (55), each holding projection having at least one cutting edge (57), and an intermediate section (51) between the fixing section (50) and the holding section (52),
whereby the holding projections (55) intrude into the outer sheathing (12) of the hose end section (8) in order to fix it and an axial clearance (70) between the hose end (27) and the fixing part (43,44) is provided,
**characterized in that** the holding projections (55) intrude into the outer sheathing (12) of the hose end section (8) until the radially inner ends (56) of the holding projections (55) reach a reinforcement layer (10) of the hose end section (8), which particularly contains metal wires.

2. A hose fitting according to claim 1,
wherein the axial length of the clearance (70) is greater than the axial distance (d) between two adjacent arranged holding projections (55).

3. A hose fitting according to claim 1,
wherein the intermediate section (51) is at least partly conically shaped.

4. A hose fitting according to claim 3,
wherein the wall of the intermediate section (51) of the holding sleeve has an essentially constant thickness.

5. A hose fitting according to claim 1,
wherein the holding sleeve (7) provides a clamping projection (60), which is projecting radially inward from the holding section (52) and axially arranged between the holding projections (55) and the free end (61) of the holding sleeve (7) opposed to the fixing section (50).

6. A hose fitting according to claim 1,
wherein the distance (d) between two adjacent holding projections (55) in the axial direction (30) correspond essentially to the thickness of the hose wall.

7. A hose fitting according to claim 1,
wherein the insert section (25) of the connecting element (6) has at least partly a ribbed outer surface.

8. A hose fitting according to claim 1,
wherein the outer diameter of the insert section (25) is reduced along an end part (35) of the insert section (25).

## Patentansprüche

1. Schlaucharmatur (5) in Kombination mit einem Schlauchendabschnitt (8), welche Armatur ein Verbindungselement (6) und eine Befestigungshülse (7) zur Befestigung der Schlaucharmatur (5) an dem Schlauchendabschnitt (8) aufweist, wobei das Verbindungselement (6) einen Einsatzabschnitt (25) hat, der in die Öffnung (26) des Schlauchendabschnitts (8) eingesetzt ist, wobei das Verbindungselement (6) einen einem Endteil (35) des Einsatzabschnitts (25) entgegengesetzten, radial nach außen vorspringenden Anschlag (36) aufweist, der den Einsatzabschnitt (25) in axialer Richtung (30) begrenzt, wobei der radial nach außen vorspringende Anschlag (36) eine ringförmige Anlageebene (37) für das Schlauchende (27) hat, die der in der Axialrichtung (30) weisenden Außenfläche (28) des Einsatzabschnitts (25) benachbart angeordnet ist, wobei das Verbindungselement (6) eine ringförmige nutähnliche Vertiefung (40) dem Anschlag (36) benachbart in seiner Außenfläche hat, wobei die Befestigungshülse (7) an ihrem einen Ende einen verformbaren Befestigungsabschnitt (50) mit einem Befestigungsstück (43) aufweist, das in ein Befestigungsgegenstück (42) des Verbindungselements (6) eingreift, um die Befestigungshülse (7) nach der Verformung des Befestigungsstücks an dem Verbindungselement (6) zu befestigen, wobei das Befestigungsstück (43) der Befestigungshülse (7) durch einen radial nach innen vorspringenden Kragen (44) gebildet ist und das Befestigungsgegenstück (42) durch eine ringförmige Nut (45) gebildet ist, wobei der Querschnitt der ringförmigen Nut (45) an den Querschnitt des Kragens (44) angepasst ist, wobei die Befestigungshülse (7) einen Halteabschnitt (52) mit radial nach innen vorragenden Haltevorsprüngen (55) hat, wobei jeder Haltevorsprung mindestens eine Schneidkante (57) aufweist, sowie einen Zwischenabschnitt (51) zwischen dem Befestigungsabschnitt (50) und dem Halteabschnitt (52), wobei die Haltevorsprünge (55) in den äußeren Mantel (12) des Schlauchendabschnitts (8) eindringen, um diesen zu befestigen, und ein axialer Zwischenraum (70) zwischen dem Schlauchende (27) und dem Befestigungsteil (43, 44) vorgesehen ist, **dadurch gekennzeichnet, dass** die Haltevorsprünge (55) in den äußeren Mantel (12) des Schlauchendabschnitts (8) eindringen, bis die radial inneren Enden (56) der Haltevorsprünge (55) eine Verstärkungslage (10) des Schlauchendabschnitts (8) erreichen, welche insbesondere Metalldrähte enthält.

2. Schlaucharmatur nach Anspruch 1, bei welcher die axiale Länge des Zwischenraums (70) größer ist als der axiale Abstand (d) zwischen zwei benachbart angeordneten Haltevorsprüngen (55).

3. Schlaucharmatur nach Anspruch 1, bei welcher der Zwischenabschnitt (51) zumindest teilweise konisch geformt ist.

4. Schlaucharmatur nach Anspruch 3, bei welcher die Wand des Zwischenabschnitts (51) der Befestigungshülse eine im Wesentlichen konstante Dicke hat.

5. Schlaucharmatur nach Anspruch 1, bei welcher die Befestigungshülse (7) einen Klemmvorsprung (60) aufweist, der von dem Halteabschnitt (52) radial nach innen vorspringt und axial zwischen den Haltevorsprüngen (55) und dem freien Ende (61) der Befestigungshülse (7) dem Befestigungsabschnitt (50) entgegengesetzt vorgesehen ist.

6. Schlaucharmatur nach Anspruch 1, bei welcher der Abstand (d) zwischen zwei benachbarten Haltevorsprüngen (55) in der Axialrichtung (30) im Wesentlichen der Dicke der Schlauchwand entspricht.

7. Schlaucharmatur nach Anspruch 1, bei welcher der Einsatzabschnitt (25) des Verbindungselements (6) eine zumindest teilweise gerippte Außenfläche hat.

8. Schlaucharmatur nach Anspruch 1, bei welcher der Außendurchmesser des Einsatzabschnitts (25) entlang einem Endteil (35) des Einsatzabschnitts (25) verringert ist.

## Revendications

1. Raccord de tuyau (5) en combinaison avec une section d'extrémité de tuyau (8), le raccord présentant un élément de raccordement (6) et une douille de retenue (7) pour fixer le raccord de tuyau (5) à ladite section d'extrémité (8) du tuyau, l'élément de raccordement (6) ayant une section rapportée (25) insérée dans l'ouverture (26) de la section d'extrémité (8) du tuyau, l'élément de raccordement (6) ayant un arrêt (36) saillant radialement vers l'extérieur opposé à une partie d'extrémité (35) de la section rapportée (25) et limitant la section rapportée (25) dans la direction axiale (30), l'arrêt (36) qui fait saillie radialement vers l'extérieur ayant un plan de butée annulaire (37) pour venir s'appuyer sur l'extrémité de tuyau (27) aménagé adjacent à la face externe (28) de la section rapportée (25) tournée dans la direction axiale (30), l'élément de raccordement (6) ayant une cavité annulaire (40) en forme de rainure sur sa face externe adjacente à l'arrêt (36), la douille de retenue (7) ayant une section de fixation déformable (50) à sa première extrémité avec une partie de fixation (43) qui s'engage sur une contre-partie de fixation (42) de l'élément de raccordement (6) afin de fixer la douille de retenue (7) à l'élément de raccordement (6) après déformation de la section de fixation, la partie de fixation (43) de la douille de retenue (7) étant formée par une collerette (44) saillant radialement vers l'intérieur et la contre-partie de fixation (42) étant formée par une rainure annulaire (45), de sorte que la section transversale de la rainure annulaire (45) soit adaptée à la section transversale de la collerette (44), la douille de retenue (7) ayant une section de retenue (52) avec des saillies de retenue (55) saillant radialement vers l'intérieur, chaque saillie de retenue ayant au moins une arête de coupe (57) et une section intermédiaire (51) entre la section de fixation (50) et la section de retenue (52), de sorte que les saillies de retenue (55) entrent dans le gainage externe (12) de la section d'extrémité (8) du tuyau afin de fixer celui-ci et il est prévu un jeu axial (70) entre l'extrémité (27) du tuyau et la partie de fixation (43, 44), **caractérisé en ce que** les saillies de retenue (55) entrent dans le gainage externe (12) de la section d'extrémité (8) du tuyau jusqu'à ce que les extrémités radialement internes (56) des saillies de retenue (55) atteignent une couche de renfort (10) de la section d'extrémité (8) du tuyau, qui contient en particulier des fils métalliques.

2. Raccord de tuyau selon la revendication 1, dans lequel la longueur axiale du jeu (70) est supérieure à la distance axiale (d) entre deux saillies de retenue (55) aménagées adjacentes.

3. Raccord de tuyau selon la revendication 1, dans lequel la section intermédiaire (51) est au moins en partie de forme conique.

4. Raccord de tuyau selon la revendication 3, dans lequel la paroi de la section intermédiaire (51) de la douille de retenue a une épaisseur sensiblement constante.

5. Raccord de tuyau selon la revendication 1, dans lequel la douille de retenue (7) fournit une saillie de serrage (60), qui fait saillie radialement vers l'intérieur depuis la section de retenue (52) et est aménagée axialement entre les saillies de retenue (55) et l'extrémité libre (61) de la douille de retenue (7) opposée à la section de fixation (50).

6. Raccord de tuyau selon la revendication 1, dans lequel la distance (d) entre deux saillies de retenue adjacentes (55) dans la direction axiale (30) correspond sensiblement à l'épaisseur de la paroi du tuyau.

7. Raccord de tuyau selon la revendication 1, dans lequel la section rapportée (25) de l'élément de raccordement (6) a au moins en partie une surface externe nervurée.

8. Raccord de tuyau selon la revendication 1, dans lequel le diamètre externe de la section rapportée (25) est réduit le long d'une partie d'extrémité (35) de la section rapportée (25).
